Europäisches Patentamt

European Patent Office

Office européen des brevets

(19)

(11) Publication number: **0 206 495**
A1

(12) # EUROPEAN PATENT APPLICATION

(21) Application number: **86303647.1**

(22) Date of filing: **14.05.86**

(51) Int. Cl.⁴: **F 16 K 31/06, F 16 K 31/02**

(30) Priority: **18.05.85 GB 8512609**

(71) Applicant: **LUCAS INDUSTRIES public limited company, Great King Street, Birmingham, B19 2XF West Midlands (GB)**

(43) Date of publication of application: **30.12.86 Bulletin 86/52**

(72) Inventor: **Bayliss, John Patrick, 433 Birchfield Road, Redditch Worcestershire B97 4NF (GB)**

(74) Representative: **Spall, Christopher John et al, BARKER, BRETTELL & DUNCAN 138 Hagley Road, Edgbaston Birmingham B16 9PW (GB)**

(84) Designated Contracting States: **DE FR IT**

(54) **Improvements in solenoid-operated fluid flow control valve means.**

(57) A solenoid-operated fluid flow control valve has a housing 1 with inlet and outlet ports 2, 3 connected by a fluid chamber 4, and a valve member 5 operated by the armature 7 of a solenoid 6 for controlling fluid flow between the ports 2, 3. A sealing means 8 is provided to seal the solenoid 6 from the fluid chamber 4, and includes a non-magnetic member 9 which separates the solenoid 6 from the fluid chamber 4 and from the armature 7. The member 9, which may be a stainless steel disc, simplifies the sealing means 8 and acts as a spacer to improve the drop-out time of the armature 7, as well as forming an abutment for an armature spring 33. The valve member 5 co-operates with a seat 31 on the outlet port 3, and is self-seating, being urged onto the seat 31 by the spring 33 and fluid pressure, and away from the seat 31 by the solenoid 6.

EP 0 206 495 A1

1

# IMPROVEMENTS IN SOLENOID-OPERATED
# FLUID FLOW CONTROL VALVE MEANS

This invention relates to solenoid-operated fluid flow control valve means of the kind comprising a housing having two fluid flow ports connected by a fluid chamber, a valve member for controlling fluid flow between the ports, a solenoid and an armature operated by the solenoid, with the armature controlling the valve member.

Valve means of the kind set forth are often complex and expensive to produce. The aim of the present invention is to provide a valve means which is simple and cheap to produce, as well as being efficient in operation.

According to our invention, in a solenoid-operated fluid flow control valve means of the kind set forth, the armature floats in the fluid chamber and carries the valve member, and a sealing means between the solenoid and the fluid chamber includes a non-magnetic member, which separates the solenoid from the fluid chamber, and separates the solenoid from the armature, and acts as an abutment for an armature spring.

The use of sealing means to separate the solenoid from the fluid chamber is advantageous, and the provision of the non-magnetic member as part of the sealing means is particularly useful. Firstly, because the member separates the solenoid from the armature, the sealing arrangement is simplified, as it does not have to accommodate movement of the armature. Secondly, the non-magnetic member acts as a spacer between the solenoid and the armature. This, as is well-known, improves the drop-out time of the armature, that is, the response of the armature to de-energisation of the solenoid. Thirdly, the use of the member as an abutment for a spring biassing a floating armature also simplifies the construction of the valve means. Thus the provision of the non-magnetic member results in a valve means which is efficient in operation and has a simple construction, so is cheap to produce.

The valve member may also be arranged to simplify the construction of the valve means. The valve member co-operates with a valve seat formed on one of the ports in order to control fluid flow. The seat is preferably formed on the outlet port, and the valve member is urged into engagement with the seat by a spring force and the fluid pressure, and is moved away from the seat by operation of the solenoid. With this arrangement the valve member can be permitted to find its own position on the valve seat, so that accurate guide surfaces are not required, which simplifies construction of the valve means. The spring force is provided by the armature spring, which is a light spring acting between the non-magnetic member and the armature. Conveniently, the armature comprises an annular disc member, with the valve member comprising a ball located in the central hole of the disc member. The valve seat may be formed on an insert in the housing.

Preferably the non-magnetic member comprises a stainless steel shim, with the sealing means completed by a rubber O-ring.

The valve means is suitable for use with liquids or with gases.

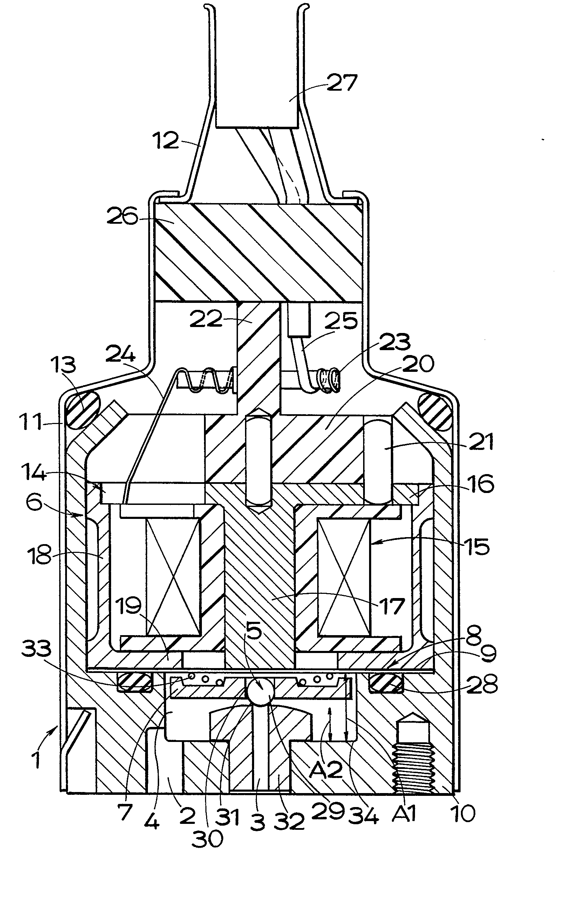

An embodiment of our invention is illustrated in the single Figure of the accompanying drawings which shows a longitudinal section through a solenoid-operated fluid flow control valve means.

The valve means shown in the Figure generally comprises a housing 1 having an inlet port 2 and an outlet port 3 connected by a fluid chamber 4, a valve member 5 for controlling fluid flow between the ports, a solenoid 6 and an armature 7 operated by the solenoid 6, with the armature 7 controlling movement of the valve member 5. The valve means is also provided with a sealing means 8 which includes a non-magnetic member 9 which serves to separate the solenoid 6 from the fluid chamber 4 and from the armature 7.

The housing 1 is of non-magnetic material, such as aluminium, and has a main part 10, and covers 11, 12, with a seal 13 provided between the main part 10 and the cover 11. The solenoid 6 is located in the main part 10 of the housing, and comprises a soft iron core 14, and a coil 15. The core 14 is formed in two parts. The first part comprises a circular plate 16 from which projects a central post 17 which engages the non-magnetic member 9. The coil 15 is wound round the post 17. The second part comprises an annular member 18 surrounding the coil 15, and an annular flange 19 which also engages the member 9. An insulating block 20 is attached to the circular plate 16 by pins 21, and has an upstanding projection 22 provided with a pair of terminal pins 23. Solenoid leads 24 pass through slots in the plate 16 and the block 20, and are attached to the terminal pins 23. The terminal pins 23 are also connected to electrical control leads 25, which are carried by a second insulating block 26 and a connector 27 at the top of the housing.

The solenoid 6 is sealed from the chamber 4 by the sealing means 8, which comprises a rubber O-ring 28 and the member 9. The member 9 is an imperforate stainless steel disc, which also separates the solenoid 6 from the armature 7. It therefore acts as a spacer, which ensures that the armature 7 responds rapidly to de-energisation of the solenoid 6. The armature 7 comprises an annular disc of magnetic iron, which is free to float in the fluid chamber 4. The valve member 5 comprises a metal ball 29, which is pressed into the central hole 30 of the armature disc. This construction of the armature 7 and valve member 5 is small and light, which means that the armature 7 also responds rapidly to energisation of the solenoid 6. The ball 29 cooperates with a valve seat 31 formed round the outlet port 3, which is provided on an insert 32 in the housing part 10. A light armature spring 33 between the member 9 and the armature disc 7 biasses the ball 29 towards the valve seat 31.

In the position shown in the drawing the solenoid 6 is de-energised, and the valve member 5 is held in engagement with the valve seat 31 by the force in the spring 33 and the pressure of the fluid in the chamber 4, so that communication between the ports 2, 3 is cut off. When the solenoid 6 is energised, the armature 7 is attracted to the solenoid 6, moving the valve member 5 away from the valve seat 31, and allowing fluid to flow from the inlet port 2 to the outlet port 3. When the solenoid 6 is de-energised the fluid forces and the spring force move the armature 7 so that the valve member 5 engages the valve seat 31 again. The valve member 5 is permitted to find its own position on the seat 31, with the armature disc 7 being free to move to accommodate this.

The valve means shown in the drawing has a number of advantages. Firstly, it has a simple construction, due primarily to the provision of the non-magnetic member 9 which acts not only as part of the sealing means 8, but also as a spacer, and a spring abutment. Secondly, it is relatively cheap to manufacture, because of its simple construction and the arrangement of the valve member 5. In particular, the arrangement of the valve member 5 so that it is self-seating means that it does not have to be guided accurately by the armature 7, so that there is no need for close guidance tolerances for the armature 7. Furthermore, the use of the ball 29 as the valve member reduces the tolerance variations on the valve member. Thus in practice the only distances whose tolerances affect the movement of the armature 7 and valve member 5 are the distances A1 - between the lower face 34 of the fluid chamber 4 and the member 9 - and A2 - between the face 34 and the valve seat 31. As there are only two of these, the armature 7 and the valve member 5 require no adjustment during assembly.

Thirdly, the armature 7 and the valve member 5 respond rapidly to operation of the solenoid 6, and in particular to its de-energisation. This is due principally to the non-magnetic member 9 acting as a spacer between the solenoid 6 and the armature 7, but is also aided by the fact that the armature and valve member are urged towards the seat 31 by fluid pressure forces.

Finally, it will be noted that the range of movement of the armature 7 and valve member 5 is quite small, and that the combined mass of these members is small. The kinetic energy generated by their movement as the valve closes, which has to be absorbed by the valve seat 31, is therefore also quite small. This means that the valve seat 31 will not wear rapidly, so that the valve means has a prolonged life.

The valve means is suitable for use with liquids or gases, and the embodiment shown is designed for use in a pneumatic braking system. If the valve means is to be used in an hydraulic system operating at high pressure the annular space round the post 17 of the first core part will be filled with a ceramic or other non-magnetic filler to support the member 9.

In a further modification (not shown), the member 9 may be of any suitable non-magnetic composite or material instead of stainless steel.

7

CLAIMS

1. A solenoid-operated fluid flow control valve means comprising a housing (1) having two fluid flow ports (2, 3) connected by a fluid chamber (4), a valve member (5) for controlling fluid flow between the ports, a solenoid (6) and an armature (7) controlling the valve member (5) and operated by the solenoid (6), characterised in that the armature (7) floats in the fluid chamber (4) and carries the valve member (5), and a sealing means (8) between the solenoid (6) and the fluid chamber (4) includes a non-magnetic member (9) which separates the solenoid (6) from the fluid chamber (4), and separates the solenoid (6) from the armature (7), and acts as an abutment for an armature spring (33).

2. A solenoid-operated fluid flow control valve means according to claim 1, characterised in that the valve member (5) cooperates with a seat (31) formed on the outlet port (3), the valve member (5) being urged into engagement with the seat (31) by a spring force and the fluid pressure, and moved away from the seat (31) by operation of the solenoid (6).

3. A solenoid-operated fluid flow control valve means according to claim 2, characterised in that the spring force is provided by the armature spring (33).

4. A solenoid-operated fluid flow control valve means according to any preceding claim, characterised in that the armature (7) comprises an annular disc member, and the valve member (5) comprises a ball (29) located in the central hole (30) of the disc member.

5. A solenoid-operated fluid flow control valve means according to any of claims 2 to 4, characterised in that the valve seat (31) is formed on an insert (32) in the housing (1).

6. A solenoid-operated fluid flow control valve means according to any preceding claim, characterised in that the non-magnetic member comprises a stainless steel shim (9), with the sealing means (8) completed by a rubber O-ring (28).

# EUROPEAN SEARCH REPORT

**European Patent Office**

| | DOCUMENTS CONSIDERED TO BE RELEVANT | | EP 86303647.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | AT - B - 291 699 (DANFOSS A/S)<br>* Totality *<br>-- | 1-6 | F 16 K 31/06<br>F 16 K 31/02 |
| A | DE - B - 1 284 227 (HERION)<br>* Totality *<br>-- | 1-6 | |
| A | DE - A1 - 2 445 493 (FR. BUSCHJOST)<br>* Claim 1; fig. *<br>-- | 1-4 | |
| A | DE - A1 - 2 513 630 (EXPERT INDUSTRIAL CONTROLS)<br>* Totality *<br>-- | 1-6 | |
| A | DE - A1 - 2 948 874 (R. BOSCH)<br>* Claim 7; fig. 1,3 *<br>-- | 1-4 | TECHNICAL FIELDS SEARCHED (Int. Cl.4) |
| A | DE - A1 - 3 207 919 (R. BOSCH)<br>* Totality *<br>-- | 1-6 | F 16 K 31/00 |
| A | US - A - 3 677 826 (R. POINTOUT et al.)<br>* Totality *<br>-- | 1-6 | |
| A | US - A - 4 344 603 (HOZUMI et al.)<br>* Totality *<br>---- | 1-6 | |

The present search report has been drawn up for all claims

| Place of search | Date of completion of the search | Examiner |
|---|---|---|
| VIENNA | 25-08-1986 | BAUMANN |